Europäisches Patentamt

(19) European Patent Office

Office européen des brevets

(11) Publication number: **0 434 590 A1**

## (12) EUROPEAN PATENT APPLICATION

(21) Application number: **90500048.5**

(22) Date of filing: **23.05.90**

(51) Int. Cl.⁵: **A01D 46/24**

(30) Priority: **22.12.89 ES 8904348**

(43) Date of publication of application:
**26.06.91 Bulletin 91/26**

(84) Designated Contracting States:
**AT BE CH DE DK FR GB GR IT LI LU NL SE**

(71) Applicant: **Campos Pastor, Juan Carlos**
**Candanchu parcela 95, Soto de Vinuelas**
**E-28770 Colmenar Viejo (Madrid) (ES)**

(72) Inventor: **Campos Pastor, Juan Carlos**
**Candanchu parcela 95, Soto de Vinuelas**
**E-28770 Colmenar Viejo (Madrid) (ES)**

(74) Representative: **Naranjo Marcos, Maria**
**Antonia**
**Paseo de la Habana 200**
**E-28036 Madrid (ES)**

(54) **Engine operated portable tubular mechanic stick with zigzag movement for pulling down olives, almonds and like.**

(57) This patent has the advantage of being easily portable, having a zigzag movement that enables the fruit to fall, and the tip of the sitck is made of a flexible material that will not spoil the fruit. It consists of a two-stroke explosion engine (1), a metallic base with a pad (2) that fits on the user's back, a flexible transmission (3), a zigzag operating mechanism (5) and a cylindrical plastic stick (6).

F.1

EP 0 434 590 A1

## ENGINE OPERATED PORTABLE TUBULAR MECHANIC STICK WITH ZIGZAG MOVEMENT FOR PULLING DOWN OLIVES, ALMONDS AND LIKE

This patent consists of an engine operated portable tubular mechanical stick with zigzag movement, for pulling down olives, almonds and like, with flexible transmission.

Its basic components are :
- A two-stroke explosion engine
- A metallic base with a pad
- A tubular stick
- A flexible transmission device
- A zigzag operating mechanism
- A cylindrical plastic stick

Its advantages over previous machines used for similar purposes are notorious, namely :

1— its zigzag movement enables the pulling down of the fruit without damaging the tree.

2— the element in contact with the fruit is made of flexible material, which makes it easier not to damage either the fruit or the tree.

3— its parts fit into eachother and spare parts are easily replaced.

4— The set is in its whole easy to manufacture and assemble.

5— It can be easily and comfortably carried by the user.

For a better understanding of this description we enclose the attached drawings that show a non limiting example of the performance of the invention, as follows :

Fig. 1 is a view of the machine in its entirety

Fig. 2 is a section of the detail of the mechanism that transforms the movement.

Fig. 3 is a view of the exit rod

Fig. 4 is a detail of the operating rod

fig. 5 is a detail of the exit rod socket.

According to the enclosed drawings, this invention consists of an explosion engine (1) preferably a two-stroke one, which stands on an L-shaped base (2) dully padded and implemented to fit on the user's back.

The engine would be duly implemented for fastening and fixing to the base

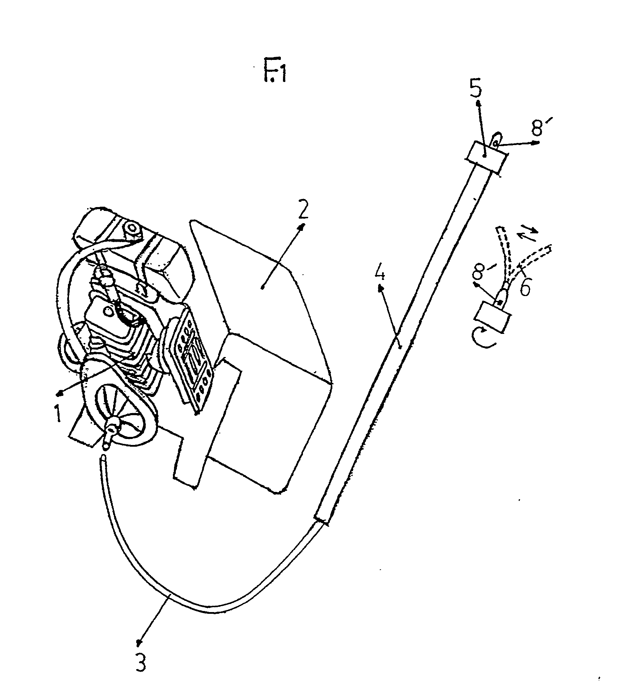

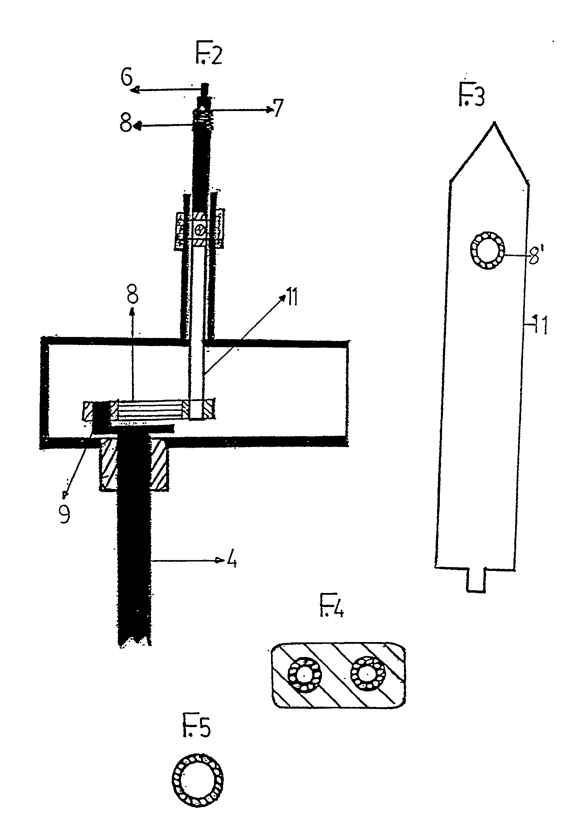

The motor shaft is connected by means of a flexible transmission (3) to a tubular, (4) preferably aluminium, stick the end of which holds the carcass of the mechanism of the zigzag operation, the exit rod being placed at the other end of the said mechanism (11, Fig. 3), screw-ended for the placing of the flexible element (6) which hits the fruit.

The mechanism that transforms the rotation movement into a zigzag movement is placed inside the oblong carcass (5), and inside it an accentric wheel is placed which can be formed by a two shaft rod (Fig. 4), in one of which the tip of the tubular stick is inserted (4) the exit rod coming out from the other (11) and bearing a 8′ perforation provided with an inner screw thread to which the spindle (7) with the flexible element that hits the fruit is screwed (6) and fixed by means of a rivet or similar that goes through the 8′ perforation.

It is easy to carry since the various parts of the ensemble can be disasembled ; the same with repairs, due to the easy replacement of spare parts.

Its also easy to operate, because once the ensemble has been assembled over its base it is carried by the user, who operates it guiding the hitting stick.

Finally there is only left to say that this invention will admit as many performing variants as possible without altering the essence of what has been described, and can be manufactured in all kind of shapes, sizes and materials, without limitation.

## Claims

1. Engine operated portable tubular mechanical stick with zigzag movement for pulling down olives, almonds and like, consisting of a two-stroke engine with a metalic L-shaped, padded base that can be fitted on the user's back and implemented to be fastened and fixed on the user as well as on the engine.

2. A flexible transmission deriving from the engine shaft links with a tubular aluminium stick which tip is introduced into an oblong carcass, and inside it there is an eccentric wheel, preferably formed by a two-shaft rod in one end of which the end of the tubular stick is introduced, and from the other end starts an exit rod with a screw thread perforation near its tip to which the spindle carrying the flexible hitting element is screwed, the spindle having also a perforation for fixing it to the exit rod.

F.1

F.2

6

7

8

F.3

8

11

8'

11

9

8

4

F.4

F.5

European Patent
Office

**EUROPEAN SEARCH REPORT**

Application Number

EP   90 50 0048

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | CH-A-607607 (WEBER)<br>* page 2, column 2, lines 37 - 42; figure 1 * | 1, 2 | A01D46/24 |
| X | CH-A-617826 (WEBER)<br>* page 2, column 2, lines 5 - 27; figure 1 * | 1, 2 | |
| A | FR-A-1072657 (MULLER)<br>* figures 1, 20 * | 1 | |
| A | FR-A-603299 (KOCH)<br>* page 1, lines 35 - 42 *<br>* page 1, line 59 - page 2, line 5; figure 1 * | 1 | |
| | | | |
| | | | **TECHNICAL FIELDS SEARCHED (Int. Cl.5 )** |
| | | | A01D<br>A01B |

The present search report has been drawn up for all claims

| Place of search | Date of completion of the search | Examiner |
|---|---|---|
| THE HAGUE | 01 MARCH 1991 | VERDOODT S.J.M. |

EPO FORM 1503 03.82 (P0401)